# EUROPEAN PATENT APPLICATION

(11) **EP 2 428 901 A1**
(43) Date of publication of application: **14.03.2012**
(21) Application number: 11178767.7
(22) Date of filing: 25.08.2011
(51) Int. Cl.: G06F 17/30

(54) **User terminal, server, displaying method and information providing method thereof**

(30) Priority: 10.09.2010 KR 20100088871
(71) Applicant: SAMSUNG ELECTRONICS CO., LTD., Suwon-si Gyeonggi-do 442-742 (KR)
(72) Inventor: Jung, Da-na, Gyeonggi-do (KR); Oh, Keum-yong, Gyeonggi-do (KR); Kim, Jung-su, Gyeonggi-do (KR)
(74) Representative: Brandon, Paul Laurence

(57) **Abstract**

A user terminal for reproducing contents stored in a multimedia storage medium includes a contents reproducing unit which reproduces contents, a display unit which displays on a screen contents reproduced by the contents reproducing unit, an information receiving unit which receives information regarding a medium of at least one of the multimedia storage medium and the contents stored therein from the multimedia storage medium, a communication unit which searches and receives additional information corresponding to the contents being reproduced from among additional information pre-stored in an external server by accessing the external server based on the information regarding a medium, and a controlling unit which controls the display unit to display the additional information received through the communication unit on the screen.

## Description

### CROSS-REFERENCE TO RELATED APPLICATIONS

This application claims priority from Korean Patent Application No. 10-2010-0088871, filed in the Korean Intellectual Property Office on September 10, 2010, the disclosure of which is incorporated herein in its entirety by reference.

### BACKGROUND

### 1. Field

Aspects of the exemplary embodiments relate to a user terminal, a server, a displaying method, and an information providing method thereof, and more particularly, to a user terminal which is capable of reproducing contents, a server, a displaying method and an information providing method thereof.

### 2. Description of the Related Art

When a specific storage medium such as a Blu-ray (BD) disc is reproduced, technical information, for example, a method for communicating with other users who watch the disk or a method for providing additional information is not included in the specification of the BD disk.

Although the feature of utilizing metadata to support disk library, title scene search, and so forth is included in the specification, such feature is optional and rarely used when the disk is produced, demonstrating defects in the current BD disk technology.

In order to enable communication with other users while a BD disk is reproduced, a java application (for example, Live Chat) is mounted on a specific disk in a studio. However, the java application is not compatible with a conventional disk, and not all studios manufacturing a BD disk produce the corresponding application.

Furthermore, as the communication is possible only among those who watch the same disk at the same time, the practicability of the above function is very low.

### SUMMARY

One or more exemplary embodiments provide a user terminal, a server, a displaying method, and an information providing method thereof.

According to an aspect of an exemplary embodiment, there is provided a user terminal. The user terminal may include a contents reproducing unit which reproduces contents, a display unit which displays on a screen contents reproduced by the contents reproducing unit, an information receiving unit which receives information regarding a medium of at least one of the multimedia storage medium and the contents stored therein from the multimedia storage medium, a communication unit which searches and receives additional information corresponding to the contents being reproduced from among additional information pre-stored in an external server by accessing the external server based on the information regarding a medium, and a controlling unit which controls the display unit to display the additional information received through the communication unit on the screen.

The controlling unit may control the display unit to display the additional information received through the communication unit during a display time corresponding to the contents being reproduced.

The user terminal may further include a user interface unit which receives the additional information regarding the contents being reproduced, which is input by a user, and the controlling unit may control the communication interface unit to provide the received additional information to the external server so that the information is stored therein.

The communication unit may request user authentication by accessing the external server based on user information.

The information receiving unit may communicate with a native platform of the multimedia storage medium using an interface or XML language.

The external server may process the received user input information and the information regarding a medium to be compatible with other media different from the multimedia storage medium and store the processed information.

The information regarding a medium may include at least one of clip information, time information, coordinates information, and object information.

The multimedia storage medium may be a Blu-ray disc.

An application for performing a function of the each component may operate on an open platform or may be included in a native application of the multimedia storage medium.

According to another aspect of an exemplary embodiment, there is provided a server which communicates with a user terminal reproducing contents stored in a multimedia storage medium. The server may include a storage unit which stores additional information corresponding to preset contents, a communication interface unit which receives a signal for requesting additional information including information regarding a medium of at least one of the multimedia storage medium and contents stored therein, and a controlling unit which controls the communication interface unit to search and provide additional information corresponding to the contents being reproduced from among the additional information stored in the storage unit based on the information regarding a medium.

According to another aspect of an exemplary embodiment, there is provided a displaying method of a user terminal reproducing contents stored in a multimedia storage medium. The method may include displaying contents being reproduced on a screen, receiving information regarding a medium of at least one of the multimedia storage medium and contents stored therein from the multimedia storage medium, searching and receiving additional information corresponding to the contents being reproduced from among additional information pre-stored in an external server by accessing the external server based on the information regarding a medium, and displaying the received additional information received on the screen.

The displaying may include displaying the received additional information during a display time corresponding to the contents being reproduced.

The method may further include receiving additional information regarding the contents being reproduced, which is input by a user and providing the received additional information to the external server so that the information is stored therein.

The method may further include requesting user authentication by accessing the external server based on user information.

The receiving may include communicating with a native platform of the multimedia storage medium using an interface or XML language.

The external server may process the received user input information and the information regarding a medium to be compatible with other media different from the multimedia storage medium and store the processed information.

The information regarding a medium may include at least one of clip information, time information, coordinates information, and object information.

The multimedia storage medium may be a Blu-ray disc.

An application for performing the method steps may operate on an open platform or may be included in a native application of the multimedia storage medium.

According to yet another aspect of an exemplary embodiment, there is provided a method for providing information of a server which communicates with a user terminal reproducing contents stored in a multimedia storage medium. The method may include storing additional information corresponding to predetermined contents, receiving a signal for requesting additional information including information regarding a medium of at least one of the multimedia storage medium and the contents stored therein, and searching and providing additional information corresponding to contents being reproduced from among the stored additional information based on the information regarding a medium.

Accordingly, users may freely share information with each other based on the same disk and various applications may be utilized.

### BRIEF DESCRIPTION OF THE DRAWINGS

The above and/or other aspects of the present inventive concept will be more apparent by describing certain aspects of the present inventive concept with reference to the accompanying drawings, in which:

FIG. 1 is a view to explain the configuration of a content reproducing system according to an exemplary embodiment;

FIG. 2 is a block diagram illustrating the configuration of a user terminal according to an exemplary embodiment;

FIG. 3 is a block diagram illustrating the configuration of a server according to an exemplary embodiment;

FIGS. 4A and 4B are views to explain the configuration of various data according to an exemplary embodiment;

FIG. 5 is a view to explain a method for providing a service according to an exemplary embodiment;

FIGS. 6A and 6B are views illustrating the configuration of a display screen according to an exemplary embodiment;

FIG. 7 is a flowchart to explain the displaying method of a user terminal according to an exemplary embodiment; and

FIG. 8 is a flowchart to explain a method for providing information according to an exemplary embodiment.

### DETAILED DESCRIPTION

Certain exemplary embodiments are described in greater detail below with reference to the accompanying drawings.

In the following description, like drawing reference numerals are used for like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

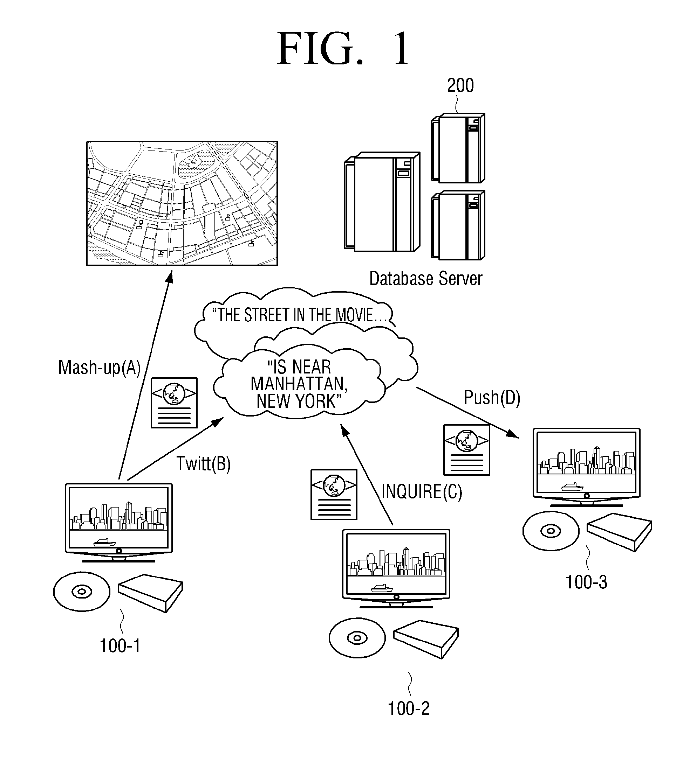

FIG. 1 is a view to explain the configuration of a content reproducing system according to an exemplary embodiment.

Referring to FIG. 1, the content providing system may comprise a plurality of user terminals 100-1, 100-2, 100-3 and a database server 200.

The content providing system may be configured such that an open platform (for example, android) is compatible with the native platform of a conventional storage medium. That is, an open platform application using a storage medium function may be produced and a method for sharing information between the open platform and the conventional native platform to operate the application normally may be provided. Specifically, an application for collecting and transmitting disk information may be provided, or an application performing the similar function on a native platform may be provided.

For example, exemplary embodiments of the present content providing system may be configured such that a user or a storage medium player (for example, a BD player) manufacturer transmits the opinion of a user who watches a BD disk to a server at a specific scene and other users may receive and view the opinion while watching the BD disk. In addition, a user may add his or her opinion to other users' opinion.

The user terminals 100-1, 100-2, 100-3 may have a player function for reproducing contents stored in a storage medium. For example, the user terminals 100-1, 100-2, 100-3 may be configured as BD players. However, the user terminals 100-1, 100-2, 100-3 are not limited thereto, and may be configured as other apparatuses having a player function of various storage media with an intrinsic native platform.

The server 200 may perform network transmission and reception with the user terminals 100-1, 100-2, 100-3 and have a database. The network may be embodied as various wired/wireless networks, and various communication methods such as network communication, USB, Bluetooth, High Definition Multimedia Interface (HDMI), Peripheral Component Interconnect (PCU) express, Ethernet, ZigBee, FireWire, CAN, IEEE 1394, PS/2, Accelerated Graphics Port (AGP), Industry Standard Architecture (ISA), Micro Channel Architecture (MCA), Extended Industry Standard Architecture (EISA), and Video Electronics Standard Architecture (VESA) may be applied.

The user terminals 100-1, 100-2, 100-3 may collect information which can be represented as clip information, time information (for example, PTS), coordinate information, or object information in a storage medium, that is, in a disk media, and transmit the information through a specific application so as to mash-up (A) or tweet (B) the information, or store the information in the server 200. In addition, the user terminals 100-1, 100-2, 100-3 may receive a user's input data regarding generated contents and store the contents in the server 200. Accordingly, a user who is reproducing the same disk may read, inquire (C), or push (D) related information. That is, the concept of social network service (SNS) may be applied to the present inventive concept.

The concept of a social network service will be explained briefly to help understanding of the present inventive concept.

The social network service is an online service on the internet that focuses on building social network among people so that users may strengthen relationship with their friends, seniors, juniors, and colleagues and interact with a new group of people. Hereinafter, the social network service will be referred to as SNS. As people's desire to express themselves is strengthened, the social network service which allows people to build social relationship and maintain close relationship with each other has increasingly developed. While a community service such as an online café or an online club consists of a group of people having the same interest and sharing a service regarding a specific theme, the social network service allows sharing interests and individuality by focusing on the individual. According to the present inventive concept, a user may receive information input by other users regarding the same contents from the server 200 and provide data he or she inputs to others through the server 200 and thus, the concept of SNS may be applied.

In accordance with a scenario to which the present inventive concept is applied, user A may write contents he or she desires to record while reproducing a movie from a disk.

Examples of Recording
- information regarding a place or object on an image
- information regarding a main character and his or her role on an image
- error or mistake made while an image is produced (a fly in the ointment)
- other comments on an image (similar to the comments of a director)

Such information may be transmitted to a server along with disk ID, title information, time information, and location information and stored. The location information may be meshed up with a map.

The stored information may be provided to user B or user C as the information is displayed on a specific location in the form of coordinates or a signal while the same disk is being reproduced so that user B or user C may inquire the information.

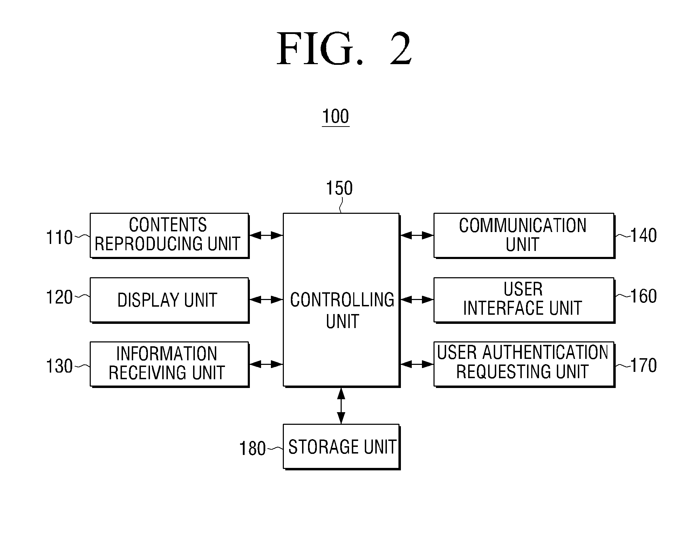

FIG. 2 is a block diagram illustrating the configuration of a user terminal according to an exemplary embodiment.

Referring to FIG. 2, a user terminal 100 comprises a content reproducing unit 110, a display unit 120, an information receiving unit 130, a communication interface unit 140, a controlling unit 150, a user interface unit 160, a user authentication requesting unit 170, and a storage unit 180.

The content reproducing unit 110 reproduces contents stored in a multi-media storage apparatus. The multi-media storage apparatus may be embodied as a recording medium such as a Blu-ray disc.

The Blu-ray disc is an optical storage medium designed to store digital data for high definition (HD) video and uses a laser having much shorter wavelength (405 nanometer) than a DVD. Therefore, the Blu-ray disc may store more data than a DVD even though the Blu-ray disc has the same size as the DVD. The present inventive concept may be applied not only to an optical storage medium such as a Blu-ray disc but also to a DVD if an appropriate environment is provided.

There are various modified Blu-ray discs such as a Blu-ray disc for computer data (BD-ROM), a recordable Blu-ray disc (BD-R), and a rewritable Blu-ray disc (BD-RE), and many copy prevention technologies are developed to prevent illegal copying of video data stored in a Blu-ray disc. Such a technology may be applied differently to each disk and thus, even if one copy prevention technology is inactivated, another copy prevention technology may be still effective. In addition, as a water-marking technology is used to easily identify the manufacturer of a BD-ROM, it is possible to prevent a disk from being illegally produced by an unauthorized manufacturer.

Contents may be recorded on a Blu-ray disc using a compression method such as MPEG 2, MPEG 7, and MPEG 21.

The display unit 120 displays contents reproduced by the content reproducing unit 110. The display unit 120 may be embodied as a cathode ray tube (CRT), a liquid crystal display (LCD), a thin film transistor liquid crystal display (TFT-LCD), a plasma display panel (PDP), a flexible display, or a head mounted display (HMD).

The information receiving unit 130 may receive information regarding at least one of a multimedia storage medium and contents stored therein from a multimedia storage medium. Specifically, the information receiving unit 130 may receive information regarding at least one of a multimedia storage medium and contents stored therein from a native platform of the multimedia storage medium.

The information regarding a medium may include at least one of clip information, time information, coordinates information, and object information. For example, the information regarding a medium may include host information, disk information, playlist information, play item information, image coordinates information, and image time information which may be obtained through a native platform.

Meanwhile, the information receiving unit 130 may communicate with the native platform of a multimedia storage medium using an interface or an XML language.

That is, if an application operates on an open platform to perform functions according to an exemplary embodiment, a method through which the open platform could request for information to be collected from a native platform is required. In this case, necessary information may be exchanged between the two platforms by defining an interface or using a markup language such as XML.

The communication interface unit 140 may access an external server 200 (see
FIG. 1) based on information regarding a medium and search and receive additional information corresponding to the contents being reproduced from among additional information pre-stored in the external server 200.

The controlling unit 150 may control overall operation of the user terminal 100. In addition, the controlling unit 150 may control the display unit 120 to display additional information received through the communication unit 140 on the screen.

Specifically, the controlling unit 150 may search additional information regarding the contents being reproduced, receive the additional information from the external server 200 based on the information regarding a medium, and control the display unit 120 to display the searched additional information during a display time corresponding to the contents being displayed.

When the information which is searched and received through the server 200 is displayed on one portion of the screen of the display unit 120, the controlling unit 150 may adjust the size of the screen where contents are being reproduced or stop reproducing the contents.

The user interface unit 160 may receive a user's input data regarding the contents being reproduced. The user's input data may be information regarding a specific time, a specific location, whether the user likes (recommends) or dislikes (does not recommend) a specific object, or the user's comments.

The user's input data received through the user interface unit 160 may be transmitted to an external server under the control of the controlling unit 150.

The user authentication requesting unit 170 may transmit user information to an external server and request user authentication. The user information may be information which could identify a user who is using an application, such as user terminal information (user terminal ID) or user account information (user ID).

The storage unit 180 may store various application programs and data for controlling the functions of the user terminal 100.

Specifically, the storage unit 180 may store an application for controlling the functions of each of the above-mentioned components, that is, the content reproducing unit 110, the display unit 120, the information receiving unit 130, the communication interface unit 140, the controlling unit 150, the user interface unit 160, and the user authentication requesting unit 170. The application may operate on an open platform or may be included in the native application of a multimedia storage medium.

The concept of the open platform will be explained briefly to help understanding of the present inventive concept. The open platform provides a large market place through a plurality of web sites for a 3rd party. In other words, the open platform is a platform (market place) which provides an application programming interface (API) that can be easily developed on a site such as SNS, and when a third-party develops an application based on the API, the open platform enables the service of the application to be performed. That is, the application which performs functions according to an exemplary embodiment may be applied to the open platform. The API represents an interface which controls the functions provided by an operating system or a programming language so that the API can be used in the application. In general, an interface for controlling a file, controlling a window, processing an image, or controlling a text may be provided.

Specifically, an application which performs functions according to an exemplary embodiment may be mounted on the user terminal 100 through a network, or may be mounted on the user terminal 100 directly. In addition, as described above, the application may operate on an open platform or as a native application of the multimedia storage medium.

The application according to an exemplary may also perform the following functions:
- providing collected user information, user's additional information and information obtained from a native platform of the multimedia storage medium to a server
- determining whether additional information regarding a disk currently being reproduced exists in a server and obtaining the additional information, if any
- analyzing the obtained additional information and displaying the information for a user during a corresponding display time.
- determining a timing to perform specific operation or controlling reproduction of disk media necessary to perform specific operation

The function of the application will be explained later in detail.

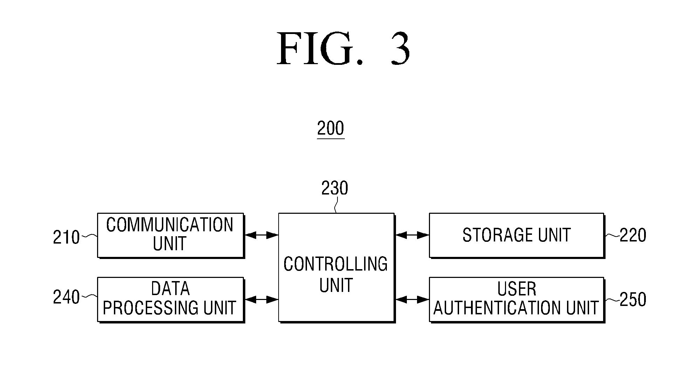

FIG. 3 is a block diagram illustrating the configuration of a server according to an exemplary embodiment.

The server 200 comprises a communication unit 210, a storage unit 220, a controlling unit 230, a data processing unit 240, and a user authentication unit 250.

The server 200 may provide various information by communicating with a user terminal which reproduces contents stored in a multi-media storage medium.

The communication unit 210 may receive an additional information request signal including information regarding a medium of at least one of a multimedia storage medium and contents stored therein from the user terminal 100.

In addition, the communication unit 210 may receive user's additional information input through the user terminal 100.

Specifically, the communication unit 210 may receive disk information, title information, reproduction information, object and coordinates information, and additional information input by a user.

The storage unit 220 may store the disk information, title information, reproduction information, object and coordinates information, and additional information input by a user, which are received through the communication unit 210. Alternatively, the storage unit 220 may pre-store additional information corresponding to predetermined contents.

The controlling unit 230 may control overall operation of the server 200.

In particular, the controlling unit 230 may control the communication unit 210 to search for additional information corresponding to contents being reproduced in the user terminal 100 from among additional information (for example, a user's comments) stored in the storage unit 220 based on information regarding a medium of at least one of a multimedia storage medium and contents stored therein and to provide the searched additional information.

The data processing unit 240 may process and refine the user's additional information which is stored in the storage unit 220 and input by a user through the user terminal 100 and medium information so that the information can be compatible with other media which are different from a multi-media storage medium. Accordingly, even though the same contents are provided through other media, the user's additional information stored in the storage unit 220 may be provided.

Meanwhile, the server 200 may have database which stores information regarding at least one of a multimedia storage medium and contents stored therein.

The user authentication unit 250 accepts a network request transmitted from the user terminal 100 and may authenticate a user or the user terminal 100. For example, the user authentication unit 250 may perform authentication through a user ID or a user terminal ID transmitted from a user or the user terminal 100.

Various data exchanged between the server 200 and the user terminal 100 may be encrypted before being exchanged, if occasions demand.

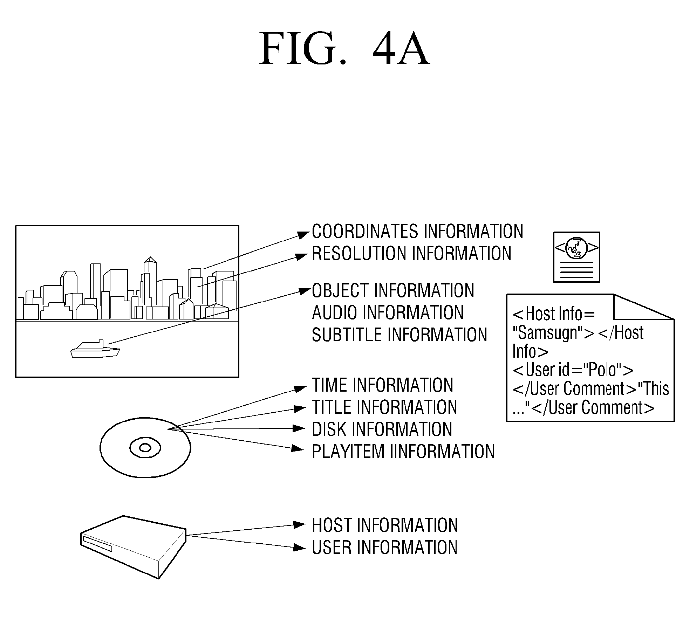

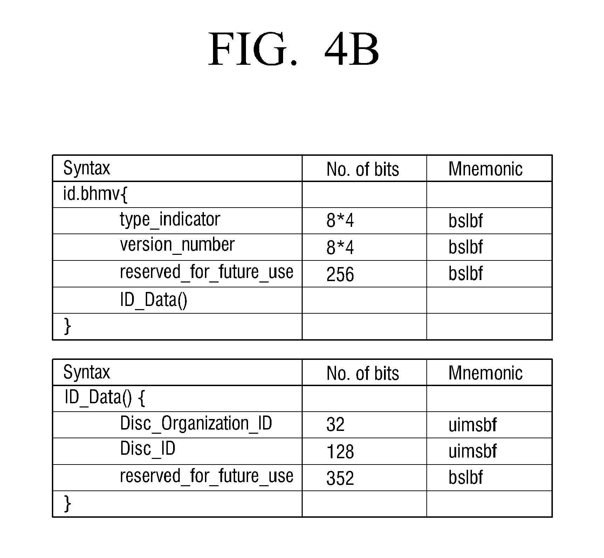

FIGS. 4A and 4B are views to explain the configuration of various data according to an exemplary embodiment.

FIG. 4A illustrates information regarding a disk, host, and contents reproduction according to an exemplary embodiment.

For example, if an image is reproduced through a disk, information regarding the disk and an image being reproduced may be inquired and obtained from the disk.

The application according to an exemplary embodiment may identify an object on an image through coordinates information, or may collect object information displayed on the screen if there is object information such as MPEG-7 and MPEG-21.

Information obtained during reproduction includes not only coordinates information and object information but also resolution information, title information, disk information, and play item information. Specifically, a disk ID, a play title ID, PTS-based time information may be included.

FIG. 4B illustrates the configuration of disk information according to an exemplary embodiment.

Hereinafter, the disk information of a BD Disc will be explained as an example.

The BD disc includes an ID value which distinguishes each of the BD disc. The location is /CERTICIFATE/id.bdmv and Disc_Organization_ID and Disk_ID are stored. A disk which is currently being reproduced may be distinguished from other disks as a pair of Disc_Organization_ID and Disk_ID.

A title number may be obtained from number 4, a play status register.

A playlist number may be obtained from number 6, a play status register.

In addition, a playitem number may be obtained from number 7, a play status register.

A reproduction time may be obtained from number 8, a play status register which stores 45kHz-based PTS value.

In addition, player host information, user information connected to an application account and so forth may be included in order to confirm that reproduction is performed in an appropriate player. Additionally, comments input by a user, that is, additional information, may be further included.

Such information may be stored using a mark-up language such as XML or in the form of section data.

In addition, such information may be used when it is transmitted from the server 200 to the user terminal 100. If another user reproduces the same disk, and if a corresponding application recognizes the disk and requests data regarding the server 200, the stored data may be transmitted and used as defined in the present inventive concept.

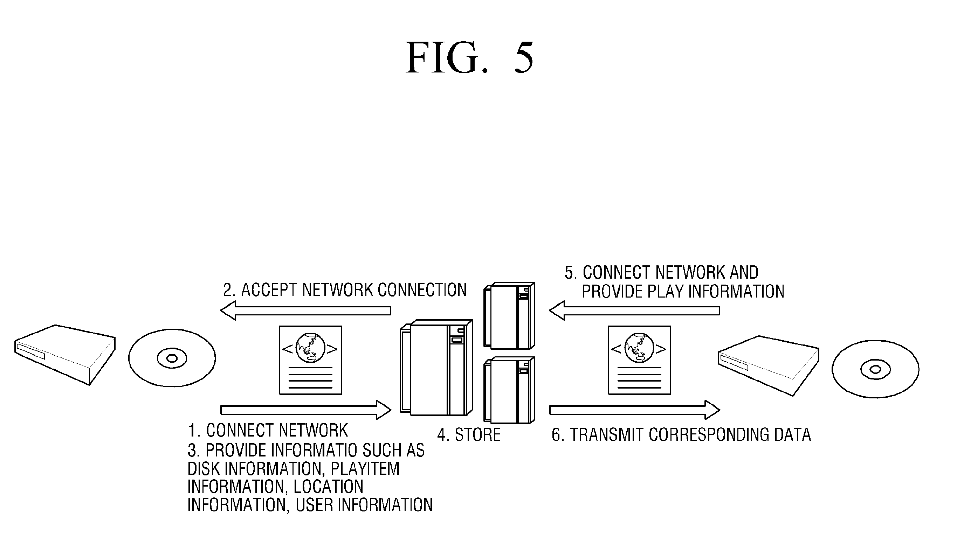

FIG. 5 is a view to explain a method for providing a service according to an exemplary embodiment.

Referring to FIG. 5, the method for providing a service according to an exemplary embodiment may be explained as follows:

### 1. process of initializing and loading an application

First, a user terminal having an open platform or a widget platform may receive a related application through a network.

Subsequently, the application may be loaded and initialized, if necessary. If an application is included in a user terminal when it is released, the application may be initialized, if necessary.

### 2. process of inputting user information

A user may input additional data through the loaded application. The additional data input by the user may be the user's opinion regarding the contents which have been reproduced previously or related information.

Specifically, the additional data may include anything on an image such as a building, an object, and a person, and may be divided into coordinate values or an intrinsic value of an object.

In the case of audio, the additional data may include an audio ID which represents audio, a subtitle ID, or a URL displayed on a web page.

A user may input his or her opinion through an input apparatus such as a remote controller or a keyboard. A URL displayed on a web page may also be input. In addition, audio may be input if an audio input apparatus is provided and supported.

### 3. process of collecting information by an application

An application collects the related information such as data added by a user, user information, host information, and so forth. The collected data is encrypted, if necessary, and transmitted to a server.

### 4. process of transmitting information to a server and sharing the information

The server stores the received data, and extracts and systemizes new data using the stored data, if necessary.

For example, the title of a disk may not be inferred from ORGANIZATION ID and DISK ID provided by the disk. In this case, a server may build database, and if a user transmits data regarding a specific disk through an application, the server may add the title of the disk to the data.

Subsequently, if a new user requests information regarding the disk from the server through an application, the server may transmit the information to the application using a mark-up language such as XML.

### 4. confirming shared data through a screen

An application may compare the current reproduction state with time information, title information, disk information, and playitem information among the data received through a server, and if the current reproduction state is consistent with the above information, the application may display another user's comments received from the server on the screen.

In addition, if it is necessary to change the resolution of an image to display it on the screen, the data received form the server may be changed appropriately according to the resolution so that the image can be displayed on an accurate location.

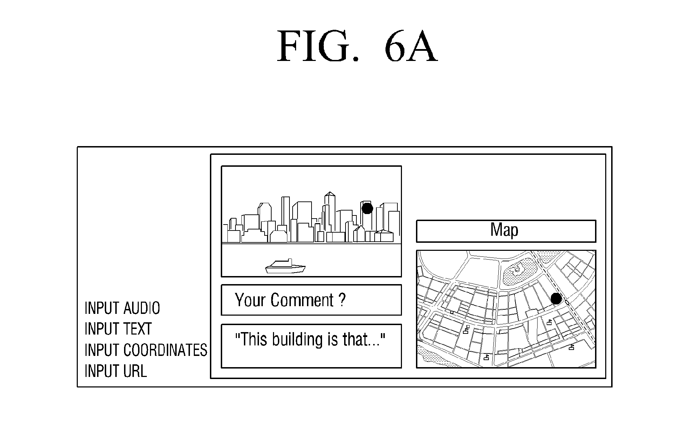

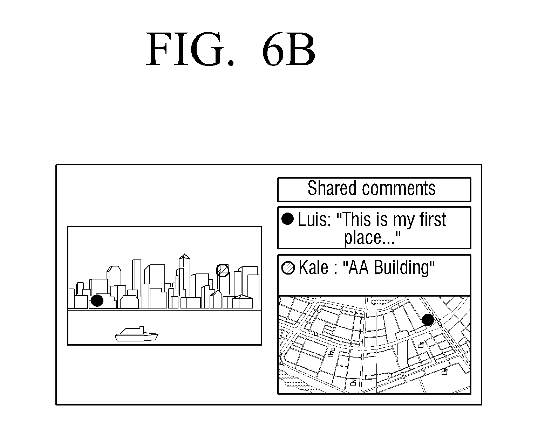

FIGS. 6A and 6B are views illustrating the configuration of a display screen according to an exemplary embodiment.

According to FIG. 6A, a user may input various comments regarding the contents being reproduced.

The comments may be embodied in various formats such as audio, text, coordinates, or URL.

According to FIG. 6B, another user's comments regarding the same contents or additional data pre-set for the same contents may be provided through a server and displayed on the display screen.

Specifically, additional information corresponding to the contents being reproduced may be searched and received from a server, and displayed during a display time.

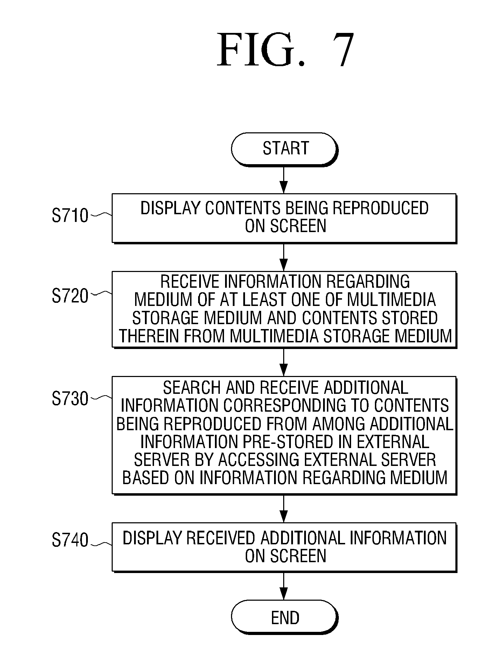

FIG. 7 is a flowchart to explain the displaying method of a user terminal according to an exemplary embodiment.

As illustrated in FIG. 7, according to the displaying method of the user terminal which reproduces contents stored in a multimedia storage medium, first, contents to be reproduced are displayed on the screen. (S710). The multimedia storage medium may be a recording storage medium such as a Blu-ray disc.

Subsequently, information regarding a medium of at least one of a multimedia storage medium and contents stored therein is received from the multimedia storage medium (S720). Specifically, information regarding a medium of at least one of a multimedia storage medium and contents stored therein may be received from the native platform of a multimedia storage medium.

The information regarding a medium may include at least one of clip information, time information, coordinates information, and object information. In this case, the information regarding a medium may be received by communicating with the native platform of a multimedia storage medium using an interface or XML language.

Subsequently, additional information corresponding to the contents being reproduced from among additional information pre-stored in an external server may be searched and received by accessing the external server based on information regarding a medium (S730).

Subsequently, the received additional information is displayed on the screen (S740). In this case, the received additional information may be displayed during a display time corresponding to the contents being displayed.

In addition, additional information regarding the contents which are input by a user and being reproduced may be received, and the received additional information may be provided to an external server and stored therein.

Furthermore, user authentication may be requested by accessing the external server based on user information.

The external server may process and store the received user input data and the information regarding a medium so that the information can be compatible with other media which are different from the multi-media storage medium.

Each of the above steps may be performed by a predetermined application, and the application may operate on an open platform or may be included in the native application of a multimedia storage medium.

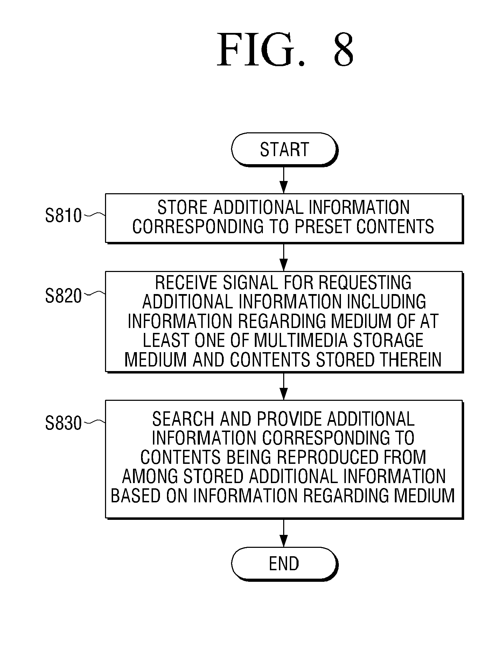

FIG. 8 is a flowchart to explain a method for providing information according to an exemplary embodiment.

As illustrated in FIG. 8, according to the method for providing information of a server which communicates with a user terminal reproducing contents stored in a multimedia storage medium, first, additional information corresponding to predetermined contents is stored (S810).

Subsequently, a signal for requesting additional information including information regarding a medium of at least one of a multimedia storage medium and contents stored therein is received (S820).

Subsequently, additional information corresponding to contents being reproduced from among stored additional information is searched based on information regarding a medium and the searched additional information is provided to a user terminal (S830).

In addition, as describe above, the present inventive concept may include a computer readable recording medium which includes the displaying method of a user terminal or a program for performing an information providing method of a server. The computer readable recording medium includes all kinds of recording apparatuses where data readable by a computer system is stored. Examples of a computer readable recording medium include ROM, RAM, CD-ROM, magnetic tape, floppy disk, and optical data storage apparatus. The computer readable recording medium may be distributed to a computer system connected via network and a code readable by a computer may be stored and executed using a distribution method.

As described above, according to an exemplary embodiment, users may freely share information with each other based on the same disk and various applications may be utilized.

Although a few embodiments of the present inventive concept have been shown and described, it should be appreciated by those skilled in the art that changes may be made to exemplary embodiments without departing from the principles and spirit of the invention, the scope of which is defined in the claims and their equivalents.

## Claims

1. A user terminal which reproduces contents stored in a multimedia storage medium, the user terminal comprising:
a contents reproducing unit which reproduces contents;
a display unit which displays on a screen contents reproduced by the contents reproducing unit;
an information receiving unit which receives information regarding medium of at least one of the multimedia storage medium and the contents stored therein from the multimedia storage medium;
a communication unit which searches and receives additional information corresponding to the contents being reproduced from among additional information pre-stored in an external server by accessing the external server based on the information regarding a medium; and
a controlling unit which controls the display unit to display the additional information received through the communication unit on the screen.

2. The user terminal as claimed in claim 1, wherein the controlling unit controls the display unit to display the additional information received through the communication unit during a display time corresponding to the contents being reproduced.

3. The user terminal as claimed in claim 1 or 2, further comprising:
a user interface unit which receives the additional information regarding the contents being reproduced, which is input by a user,
wherein the controlling unit controls the communication interface unit to provide the received additional information to the external server so that the information is stored therein.

4. The user terminal as claimed in any one of claim 1 to 3, wherein the communication unit requests user authentication by accessing the external server based on user information.

5. The user terminal as claimed in any one of claim 1 to 4, wherein the information receiving unit communicates with a native platform of the multimedia storage medium using an interface or XML language.

6. The user terminal as claimed in claim 3, wherein the external server processes the received user input information and the information regarding a medium to be compatible with other media different from the multimedia storage medium and stores the processed information.

7. The user terminal as claimed in any one of claim 1 to 6, wherein the information regarding a medium includes at least one of clip information, time information, coordinates information, and object information.

8. The user terminal as claimed in claim in any one of claim 1 to 7, wherein the multimedia storage medium is a Blu-ray disc.

9. The user terminal as claimed in any one of claim 1 to 8, wherein an application for performing a function of the each component operates on an open platform or is included in a native application of the multimedia storage medium.

10. A server which communicates with a user terminal reproducing contents stored in a multimedia storage medium, the server comprising:
a storage unit which stores additional information corresponding to preset contents;
a communication interface unit which receives a signal for requesting additional information including information regarding a medium of at least one of the multimedia storage medium and contents stored therein; and
a controlling unit which controls the communication interface unit to search and provide additional information corresponding to the contents being reproduced from among the additional information stored in the storage unit based on the information regarding a medium.

11. A displaying method of a user terminal reproducing contents stored in a multimedia storage medium, the method comprising:
displaying contents being reproduced on a screen;
receiving information regarding a medium of at least one of the multimedia storage medium and contents stored therein from the multimedia storage medium;
searching and receiving additional information corresponding to the contents being reproduced from among additional information pre-stored in an external server by accessing the external server based on the information regarding a medium; and
displaying the received additional information received on the screen.

12. The method as claimed in claim 11, wherein the displaying comprises displaying the received additional information during a display time corresponding to the contents being reproduced.

13. The method as claimed in claim 11 or 12, further comprising:
receiving additional information regarding the contents being reproduced, which is input by a user, and
providing the received additional information to the external server so that the information is stored therein.

14. The method as claimed in anyone of claim 11 to 13, further comprising:
requesting user authentication by accessing the external server based on user information.

15. A method for providing information of a server which communicates with a user terminal reproducing contents stored in a multimedia storage medium, the method comprising:
storing additional information corresponding to predetermined contents;
receiving a signal for requesting additional information including information regarding a medium of at least one of the multimedia storage medium and the contents stored therein; and
searching and providing additional information corresponding to the contents being reproduced from among the stored additional information based on the information regarding a medium.
